## Europäisches Patentamt
## European Patent Office
## Office européen des brevets

(19)

(11) Numéro de publication: **0 012 255**
**B1**

(12) **FASCICULE DE BREVET EUROPEEN**

(45) Date de publication du fascicule du brevet: **25.05.83**

(51) Int. Cl.³: **A 23 L 3/10, A 23 L 3/34**

(21) Numéro de dépôt: **79104659.2**

(22) Date de dépôt: **23.11.79**

(54) **Procédé de préparation de produits alimentaires à humidité intermédiaire pasteurisés.**

(30) Priorité: **30.11.78 GB 4661978**

(43) Date de publication de la demande:
**25.06.80 Bulletin 80/13**

(45) Mention de la délivrance du brevet:
**25.05.83 Bulletin 83/21**

(84) Etats contractants désignés:
**AT BE CH DE FR IT NL SE**

(56) Documents cités:
**AU - B - 440 542
DE - A - 2 654 463
DE - A - 2 749 751
FR - A - 2 108 247
US - A - 4 054 674**

(73) Titulaire: **SOCIETE DES PRODUITS NESTLE S.A.
Case postale 353
CH-1800 Vevey (CH)**

(72) Inventeur: **Brimelow, Christopher John Burton
57, Lakes Lane
Beaconsfield, Buckinghamshire (GB)**
Inventeur: **Gibbs, Vernon
68, Hadley Gardens
Norwood Green Southall, Middlesex (GB)**
Inventeur: **Hulland, Eric David
Coverack Horeshoe Lane
Ash Vale Aldershot, Hampshire (GB)**

Courier Press, Leamington Spa, England.

**0012255**

Procédé de préparation de produits alimentaires à humidité intermédiaire pasteurisés

La présente invention a trait aux produits à humidité intermédiaire.

Les produits à humidité intermédiare ont été développés ces dernières années dans l'optique d'obtention de produits alimentaires stockables qui ne requièrent pas des conditions spéciales de stockage telles que la réfrigération, l'apertisation, etc..., mais qui retiennent essentiellement les caractéristiques du produit alimentaire d'origine. De tels produits sont appelés parfois aliments "semi-humides" car leur teneur en humidité est intermédiaire entre celle d'un produit alimentaire à teneur en eau habituelle et celle d'un produit alimentaire séché. De tels produits ont en général une teneur en humidité supérieure à 10% et inférieure à 50% en poids.

La stabilité microbiologique des produits alimentaires à humidité intermédiaire est habituellement obtenue en réduisant partiellement ou totalement la quantité d'eau disponible pour les processus vitaux accompagnant la croissance microbienne et l'excroissance et la germination sporulée. Comme la quantité d'eau disponible pour ces processus de détérioration est en relation étroite avec la pression de vapeur d'eau dans le produit (puisque la pression de vapeur est fonction de l'eau libre), il est devenu habituel dans la technique de caractériser les produits à humidité intermédiaire par leur activité de l'eau, Aw, qui est définie par l'équation.

$$Aw=P/Po$$ (dans laquelle P est la pression de vapeur d'eau dans l'aliment et Po est la pression de vapeur de l'eau pure à la même température).

En général la plupart des microorganismes peuvent croître quand l'activité de l'eau est de 0,97 à 1,00, mais une quantité appréciable des bactéries communes ne croît pas si l'activité de l'eau est inférieure à 0,91. Pour prévenir la croissance des levures et moisissures, il faut généralement que l'activité de l'eau soit respectivement inférieure à 0,88 et 0,80. De même, les micro-organismes du type staphylocoques, les bactéries halophiles, les moisissures xérophiles et les levures osmophiles ne croissent généralement pas si l'activité de l'eau est inférieure respectivement à 0,85, 0,75, 0,65 et 0,60.

Les produits alimentaires à humidité intermédiaire sont actuellement généralement préparés avec une activité de l'eau de l'ordre de 0,60 à 0,85. Il est cependant souhaitable de s'assurer que l'activité de l'eau soit aussi élevée que possible tout en assurant l'absence de risques de détérioration ou de croissance de bactéries pathogènes, et ceci pour préserver des propriétés organoleptiques et des textures plus naturelles. Dans de tels produits sont souvent incorporés des agents antimicrobiens, lorsque l'activité de l'eau est à la limite supérieure de la plage décrite ci-dessus et également dans le but de contrôler la croissance des organismes indésirables dans les produits. Dans les exemples du brevet des Etats-Unis d'Amérique No. 4,054,674, le sorbate de potassium est utilisée comme agent antimycotique. Cependant, il serait préférable d'éviter de tels additifs. Les activités de l'eau inférieures à 0,91 sont suffisamment basses pour inhiber la croissance de toutes les bactéries résistant à la chaleur mais certaines bactéries, levures et moisissures sensibles à la chaleur, sont encore capables de proliférer à des activités de l'eau relativement élevées en dessous de 0,91. *Staphylococus aureus* est particulièrement représentatif de ce genre. On a quelquefois proposé pour cette raison de pratiquer la pasteurisation de produits alimentaires à humidité intermédiaire avant l'étape d'emballage en vue de tuer tous les organismes sensibles à la chaleur de la façon décrite dans le brevet des Etats-Unis d'Amérique No. 4,054,674. Cependant, les techniques de pasteurisation qui ont été employées sont soit inefficaces pour tuer tous les microorganismes, car ceux-ci ont une résistance à la chaleur plus élevée aux valeurs d'activité de l'eau qui ont été utilisées dans les produits alimentaires à humidité intermédiaire connus ou bien sont appliquées dans des conditions si sévères que la qualité des produits qui résulte du traitement est pauvre. De plus, la pasteurisation à été employée jusqu'à présent avant l'emballage des produits alimentaires et celà a conduit à un risque de recontamination par des micro-organismes indésirables lors du processus ultérieur d'emballage.

La présente invention se propose donc de fournir des produits alimentaires à humidité intérmédiare ayant une activité de l'eau relativement élevée, mais une résistance appropriée à la détérioration et à la production de toxines dues à la croissance des micro-organismes. Nous avons trouvé qu'on peut réaliser ces objectifs en combinant une activité de l'eau relativement élevée avec un réglage de l'acidité en l'absence d'agent antimycotique et en pasteurisant le produit alimentaire dans un emballage qui est fermé hermétiquement avant, pendant ou immédiatement après la pasteurisation.

L'invention concerne donc un procédé de préparation de produits alimentaires à humidité intermédiaire pasteurisés caractérisé par le fait qu'on pasteurise un produit alimentaire ayant une activité de l'eau de 0.86 à 0.91 obtenue par séchage du produit alimentaire ou d'au moins une partie des ingrédients de celui-ci ou par incorporation d'au moins un agent humectant de qualité alimentaire n'ayant pas des propriétés antimycotiques dans le produit alimentaire, ou par une combinaison de ces méthodes, et un pH de 4.5—5.5 obtenu par incorporation d'un agent acidulant de qualité alimentaire en l'absence d'agent antimycotique dans un emballage et on ferme hermétiquement l'emballage avant, pendant ou immédiatement après l'avoir pasteurisé.

2

**0012255**

L'agent humectant lie une partie de l'eau de telle sorte qu'elle ne soit plus disponible pour la croissance microbienne. De tels humectants comprennent les sucres, sels, polyols et acides solubles dans l'eau. Du point de vue économique et des caractéristiques organoleptiques ainsi que de la facilité d'application de tels humectants, on préfère utiliser le glycérol, le sucrose, le dextrose, le chlorure de sodium et/ou le sorbitol. On préfère cependant en général utiliser un mélange de ces deux techniques, c'est-à-dire sécher une partie ou l'ensemble des ingrédients du produit alimentaire lui-même et y incorporer un humectant ou un mélange d'humectants.

Les produits alimentaires selon l'invention ont un pH de 4,5 à 5,5 et ceci peut être obtenu par incorporation d'une quantité appropriée, par exemple, d'un acide de qualité alimentaire tel que l'acide acétique, citrique, lactique, malique out tartrique dans le produit alimentaire. Dans le cas où l'utilisation d'un acide libre dans le produit alimentaire affecterait ses propriétés par réaction celui-ci avec d'autres ingrédients, tels que par exemple dans les produits farneux contenant des agents de levée, on préfère incorporer un agent acidulant qui ne provoque pas une telle réaction. Par exemple nous avons trouvé qu'on peut utiliser la glucono-$\delta$-lactone ou le pyrophosphate acide de sodium comme acidulant dans des produits alimentaires à base de pâte contenant des agents de levée.

Les produits alimentaires selon l'invention sont emballés dans des emballages qui peuvent être fermés hermétiquement et sont pasteurisés à l'intérieur de ceux-ci. Cette pasteurisation peut être effectuée par remplissage à chaud des emballages et/ou par chauffage consécutif des emballages remplis, par exemple par la vapeur ou l'eau chaude, par un chauffage par les micro-ondes ou par une combinaison de ces méthodes. On doit remarquer que la pasteurisation ne tuera pas nécessairement tous les organismes indésirables dans les produits alimentaires selon l'invention, mais la croissance de tels micro-organismes qui survivent à la pasteurisation sera inhibée par la combinaison de la faible activité de l'eau et de l'acidité dans les produits alimentaires. La pasteurisation sera en général suffisante pour tuer tous les micro-organismes non sporulés et la plupart des micro-organismes sporulés sensibles à la chaleur, tels que les levures et les moisissures. Ainsi, le procédé de pasteurisation suffira à tuer les micro-organismes qui sont capables de se multiplier aux niveaux d'activité de l'eau et de pH qui existent dans les produits alimentaires selon l'invention.

L'utilisation d'activités de l'eau relativement élevées dans les produits alimentaires selon l'invention peut conduire à des propriétés améliorées de ces produits alimentaires comparés avec des produits alimentaires à humidité intermédiaire ayant des activités de l'eau plus basses. En particulier, une activité de l'eau plus élevée nécessite l'utilisation de plus faibles quantités d'humectant pour la préservation des produits alimentaires avec comme conséquence une amélioration des caractéristiques de flaveur ou organoleptiques. En plus, les produits alimentaires sont "humides" au palais. l'humidité augmentée améliore également les propriétés des produits alimentaires selon l'invention au réchauffage lorsqu'ils sont préparés pour être consommés, car le transfert de chaleur est plus efficace. Cette caractéristique est particulièrement importante quand les produits alimentaires de l'invention sont du type "à aire bouillir dans l'emballage".

Un autre avantage de l'utilisation d'activités de l'eau relativement élevées pour les produits alimentaires selon l'invention est que l'efficacité de la pasteurisation est améliorée par suite du meilleur transfert de chaleur.

Nous avons trouvé que l'utilisation d'activités de l'eau relativement élevées conjuguée avec un réglage de l'acidité dans les aliments selon l'invention, rend les micro-organismes plus susceptibles aux dommages causés par un traitement thermique doux, tels que la pasteurisation, que dans le cas des aliments à humidité intermédiaire connus jusqu'à maintenant.

Les aliments à humidité intermédiaire selon l'invention présente n'ont pas besoin de la présence d'agents antimycotiques. Le fait qu'on évite l'utilisation de tels agents est particulièrement favorable eu égard aux restrictions légales d'utilisation de tels produits dans certaines régions et également aux résistances qu'on peut rencontrer chez les consommateurs lorsque la présence de tels agents est indiquée sur les étiquettes.

Le procédé de pasteurisation dans l'emballage utilisé dans la préparation des aliments à humidité intermédiaire selon l'invention préserve ceux-ci de toute recontamination alors qu'une telle recontamination était possible dans les procédés de pasteurisation avant emballage utilisées jusqu'à présent. L'invention présente est particulièrement adaptée aux aliments du type crêpes ou gaufres, sous forme entièrement cuits présentés dans des emballages fermé hermétiquement, de sorte qu'ils peuvent être réchauffés facilement avant consommation. De telles crêpes et gaufres peuvent être entreposées pendant de longues périodes sans réfrigération sans qu'elles ne se détériorent de manière significative. Après réchauffage, les crêpes et gaufres ont une flaveur, une arôme, une apparence et une texture comparables à ceux des crêpes et gaufres fraîchement préparées.

Les crêpes et gaufres selon l'invention peuvent être préparées par cuisson de pâte contenant des quantités telles d'humectant et/ou d'eau, que l'activité de l'eau des produits une fois cuits soit de 0,86 à 0,91. Par exemple, nous avons trouvé que les pâtes contenant de 0 à 18%, et de préférence environ 8% de glycérol et de 15 à 5%, de préférence 9% de monohydrate de dextrose et ayant une humidité de 35 à 55%, et de préférence environ 45%, conduisent à des crêpes ou gaufres entièrement cuites ayant une teneur en glycérol de 0 à 20%, une teneur en dextrose de 20 à 5% et une teneur en humidité de 32 à 42%. Lorsqu'on prépare des crêpes ou des gaufres à partir de pâte contenant les quantités préférées

3

# 0012255

mentionnées ci-dessus de glycérol, de dextrose et d'humidité, les produits complètement cuits contiennent généralement environ 7,0% de glycérol, 10% de dextrose et 37% d'humidité.

Les crêpes et gaufres selon l'invention peuvent être préparées à partir de pâtes dans lesquelles les ingrédients habituels tels que par exemple, les huiles comestibles ou les shortenings tels que par exemple l'huile d'arachide, l'huile de noix de coco, l'huile de coton, l'huile de tournesol, l'huile de palmiste, sous forme hydrogénée ou non hydrogénée et leurs mélanges; les oeufs, le sel, la farine, le lait, le petit-lait et les agents de levée.

Comme indiqué ci-dessus, les agents acidulants préférés pour les pâtes contenant des agents de levée comme par exemple le bicarbonate de sodium, sont la glucono-$\delta$-lactone ou le pyrophosphate acide de sodium.

Les crêpes et gaufres selon l'invention peuvent être cuites de façon conventionnelle sur une plaque ou une grille et ensuite conditionnées dans des emballages hermètiques et pasteurisées vantageusement.

Le procédé selon l'invention peut être appliqué aux légumes et aux produits à base de légumes.

Ainsi par exemple, on peut couper des oignons en tranches, les tremper dans l'agent humectant les comprimer pour enlever l'excès de liqueur et les sécher à l'air pour conduire à un produit à humidité intermédiaire représentant environ 25% en poids des oignons d'origine. Ce produit peut ensuit être mélangé avec une autre quantité d'humectant, placé dans des sachets en matière plastique et pasteurisé.

Nous avons également trouvé que la présente invention peut être appliquée à des produits du genre pâtes alimentaires telles que par exemple les tortellinis. Les exemples qui suivent illustrent la préparation de produits alimentaires selon l'invention:

Example 1

Crêpes prêtes à être consommées

Ingrédients:

| | |
|---|---|
| farine | 24,0% |
| bicarbonate de sodium | 0,3% |
| sel | 0,7% |
| dextrose | 9,2% |
| sucre | 2,5% |
| glucono-$\delta$-lactone | 0,5% |
| petit-lait en poudre | 2,0% |
| oeuf | 12,3% |
| huile végétale | 3,1% |
| glycérol | 3,3% |
| eau | 37,1% |
| | 100,0% |

La farine, le bicarbonate de sodium, l'agent acidulant, la poudre de petit lait, le sel, le dextrose et le sucre sont mélangés. L'oeuf additionné d'une petite quantité d'eau est mélangé à l'ensemble. L'huile, le glycérol et l'eau restante sont ensuite ajoutés progressivement et le mélange est agité pour former une pâte homogène et lisse. La pâte est ensuite transférée a des moules pour crêpes placés sur une plaque de chauffage graissée. Les crêpes sont cuites de chaque côté. L'Aw de la pâte est approximativement 0,93 à 25°C et son pH est 5,5. L'Aw de la crêpe cuite est 0,87 à 25°C et son pH 5,4.

Les crêpes sont ensuite mises dans des barquettes thermoformées en matériau plastique composite résistant à la chaleur. Les barquettes sont fermées hermétiquement avec un couvercle en matériau composite thermorésistant. La barquette et son contenu sont ensuite placés dans un four à micro-ondes et réchauffés, de sorte que le centre de l'emballage atteigne une température de 95°C.

L'emballage est ensuite dirigé vers un tunnel sous atmosphère de vapeur et pasteurisé.

Un examen micro-biologique de la crêpe de cet exemple a été effectué après un stockage d'un mois et de trois mois à 37°C. Le compte bactérien standard et les comptes moisissures/levures ont été en moyenne de $10^2$, et respectivement moins de 10.

4

**0 012 255**

Exemple 2
Gaufres prêtes à la consommation

| Ingrédients: | |
|---|---|
| Farine | 29.8% |
| bicarbonate de sodium | 0,4% |
| sel | 0,8% |
| dextrose | 11,6% |
| sucre | 2,5% |
| glucono-$\delta$-lactone | 0,8% |
| petit-lait en poudre | 2,1% |
| oeuf | 15,6% |
| huile végétale | 5,0% |
| glycérol | 7,5% |
| eau | 23,9% |
| | 100,0% |

On mélange les ingrédients comme dans l'exemple 1 et on utilise la pâte ainsi préparée pour faire des gaufres rondes. L'Aw de la pâte à gaufres est d'environ 0,93 à 25°C et son pH 5,5. Les gaufres sont ensuite cuites de chaque côté sur une plaque chauffante et ensuite transférées dans des boîtes de conserve. Les boîtes sont fermées hermétiquement et ensuite pasteurisées. L'Aw du produit est 0,87 à 25° et son pH 5,4.

Un examen microbiologique du produit cuit de cet exemple a été fait de la même manière que dans l'exemple 1. Les résultats ont été essentiellement les mêmes que dans l'exemple 1.

Exemple 3
Oignons à cuire

Des oignons coupés en tranches sont traités par des humectants et l'acide citrique, le mélange ayant la composition suivante:

| oignons, émincés | 88,0% |
|---|---|
| sel | 3,5% |
| sorbitol | 4,5% |
| sucre | 3,6% |
| acide citrique | 0,4% |
| | 100,0% |

Les oignons en tranches sont mis au contact de la liqueur pendant 2 heures et pressés pour enlever l'excédent de liqueur. Le produit pré-traité a un poids de environ 55% par rapport au poids original des oignons crus en tranches. Les oignons pressés sont ensuite séchés pour donner un produit traité dont le poids est environ 25% du produit cru d'origine. Les oignons traités sont ensuite mélangés soigneusement avec le glycérol dans les proportions suivantes:

| oignons en tranches traités | 91% |
|---|---|
| glycérol | 9% |
| | 100% |

Le mélange est ensuite mis dans des sachets en matière plastique résistant à la chaleur. On ferme alors partiellement les sachets et on transfère l'emballage vers un tunnel en atmosphère vapeur et on les pasteurise. On ferme ensuite complètement les sachets immédiatement après pasteurisation et on laisse refroidir le produit. L'activité de l'eau du produit cuit est 0,86 à 25°C et son pH 4,8. Un examen microbiologique des oignons pasteurisés de cet exemple a été effectué de la même manière que dans le cas de l'exemple 1. Les résultats obtenus ont été pratiquement les mêmes que pour l'exemple 1.

5

Exemple 4
Gâteau de légumes pour friture

Ingrédients:

| | |
|---|---|
| purée de tomates (36% solides solubles totaux) | 4,5% |
| poudre d'oeuf | 3,4% |
| oeuf entier | 11,4% |
| huile végétale | 11,4% |
| sel | 1,0% |
| glycérol | 3,7% |
| biscotte rnoulue | 13,3% |
| protéine végétale texturée en granules, traitée | 11,4% |
| oignons en cubes traités | 17,1% |
| carottes en cubes traitées | 22,8% |
| | 100,0% |

La protéine végétale texturée est traitée par addition d'une partie de granules de dimensions correspondant à celles de particules de viande hanchée pour trois parties d'une solution contenant en poids 16,0% de glycérol et 6,0% de sel et on porte l'ensemble à ébullition pendant 5 min. Les granulés traités sont ensuite séparés de la liqueur et égouttés. Les carottes sont traitées en les pelant et en les coupant en dés pour donner des cubes de 6 mm×6 mm×6 mm, on les cuit dans 4 fois leur propre poids d'eau pour obtenir une texture satisfaisante, on infuse une partie des carottes cuites pendant 20 min. à 50°C dans deux parties d'une solution contenant 11,8% de glycérol et 3,9% de sel, on les sépare de la solution d'infusion, on les égoutte et on les séche jusqu'à environ 34% de leur poids après infusion.

On péle les oignons et on les coupe en cubes de 6 mm×6 mm×3 mm, on les cuit dans 4 fois leur propre poids d'eau pour obtenir une texture satisfaisante, on infuse une partie des oignons cuits pendant 20 min. à 50°C dans deux parties d'une solution contenant 13,5% de glycérol et 4,3% de sel, on sépare les oignons de la solution d'infusion, on les égoutte et on les sèche jusqu'à environ 46% de leur poids après infusion.

Le gâteau végétal est préparé en deux étapes:

1°. On mélange complètement la purée de tomates, les oeufs entiers et la poudre d'oeuf, l'huile végétale, le sel, le glycérol et la biscotte.

2°. On ajoute ensuite les légumes traités à ce mélange. Le mélange ainsi completé est séparé en deux parties puis moulé sous forme de gâteaux carrés. On place ensuite les gâteaux dans des sachets en matière plastique résistant à la chaleur. On ferme ensuite partiellement les sachets et on les chauffe dans un four à micro-ondes jusqu'à ce que le centre de l'emballage atteigne 90°C. One ferme ensuite complètement les sachets et on les pasteurise. L'activité de l'eau des produits cuits est 0,86 à 25°C et le pH est 4,9.

Un examen microbiologique du gâteau de légumes pasteurisé selon cet exemple a été conduit de la même manière que dans l'exemple 1. Les résultats obtenus ont été pratiquement les mêmes que pour l'exemple 1.

Exemple 5
Tortellinis

Ingrédients:

| | |
|---|---|
| pâtes alimentaires | |
| acide citrique | 0,3% |
| semoule de blé dur | 74,0% |
| oeuf | 21,7% |
| eau | 4,0% |
| | 100,0% |

## 0 012 255

| farce | |
|---|---|
| panure | 45,0% |
| boeuf cuit | 35,0% |
| oignons cuits | 0,4% |
| fromage | 4,0% |
| glutamate de sodium | 9,0% |
| sel | 3,0% |
| épices | 0,3% |
| acide citrique | 0,3% |
| | 100,0% |

On procède à la cuisson du boeuf et des oignons en présence d'un peu de sel et on les refroidit. On moud ensuite ce mélange et on le transfère dans un mixeur dans lequel on ajoute le reste des ingrédients de la farce.

On mélange l'ensemble et on le traite par une façonneuse à tortellinis.

On pèse la farine de semoule, l'acide citrique, l'oeuf et l'eau et on les mélange. La masse ainsi obtenue est mise sous forme de feuilles par un extrudeur et dirigée vers la façonneuse à tortellinis. On façonne des tortellinis ayant environ 30% en poids de farce et 70% en poids de pâte alimentaire.

Les tortellinis obtenus sont ensuite blanchis et séchés jusqu'à une teneur en humidité de 25% en poids basée sur l'ensemble pâte alimentaire et farce. Les tortellinis sont alors emballés dans des barquettes thermoformées à partir de matériau plastique composite résistant à la chaleur. Les barquettes sont alors fermées hermétiquement avec un couvercle en matériau plastique composite résistant à la chaleur. Les barquettes fermées sont ensuite pasteurisées et le produit refroidi. L'Aw du produit obtenu est 0,89 à 25°C et son pH est 5,4. Lorsque les deux parties du produit— la farce et la pâte alimentaire—sont séparées l'un de l'autre et testés, on trouve que les activités de l'eau se sont équilibrées par migration du sel et du glutamate de sodium depuis la farce jusque dans la pâte alimentaire au cours procédé de fabrication. Les pH de chaque composant sont également équilibrés.

Un examen microbiologique du produit de l'exemple 5 a été effectué de la même manière que pour l'exemple 1 et les résultats obtenus ont été analogues à ceux de l'exemple 1.

### Revendications

1. Procédé de préparation de produits alimentaires à humidité intermédiaire pasteurisés caractérisé par le fait qu'on pasteurise un produit alimentaire ayant une activité de l'eau de 0.86 à 0.91 obtenue par séchage du produit alimentaire ou d'au moins une partie des ingrédients de celui-ci ou par incorporation d'au moins un agent humectant de qualité alimentaire n'ayant pas des propriétés antimycotiques dans le produit alimentaire, ou par une combinaison de ces méthodes, et un pH de 4.5—5.5 obtenu par incorporation d'un agent acidulant de qualité alimentaire en l'absence d'agent antimycotique dans un emballage et on ferme hermétiquement l'emballage avant, pendant ou immédiatement après l'avoir pasteurisé.

2. Procédé selon la revendication 1, caractérisé par le fait que l'agent humectant est choisi parmi les sucres, sels, polyols et acides solubles dans l'eau ou leurs mélanges.

3. Procédé selon la revendication 2, caractérisé par le fait que l'agent humectant est choisi parmi le glycerol, le sucrose, le dextrose, le chlorure de sodium et le sorbitol ou leurs mélanges.

4. Procédé selon l'une des revendications précédentes caractérisé par le fait que l'agent acidulant est l'acide acétique, citrique, lactique, malique ou tartrique, la glucono-$\delta$-lactone ou le pyrophosphate acide de sodium.

5. Procédé selon l'une des revendications précédentes caractérisé par le fait qu'on effectue la pasteurisation par chauffage à la vapeur ou à l'eau chaude ou par chauffage au moyen de micro-ondes ou par une combinaison de ces méthodes.

6. Procédé selon l'une des revendications précédentes caractérisé par le fait que les produits alimentaires sont sous forme de crêpes, gaufres, légumes, produits à base de légumes ou du genre pâtes alimentaires.

### Patentansprüche

1. Verfahren zur Herstellung von pasteurisierten Nahrungsmittelprodukten mittlerer Feuchtigkeit, dadurch gekennzeichnet, daß man ein Nahrungsmittelprodukt mit einer Wasseraktivität von 0,86 bis 0,91, die durch Trocknen des Nahrungsmittelprodukts oder mindestens eines Teils der Bestendteile desselben oder durch Einverleibung mindestens eines für Nahrungsmittel geeigneten Feuchthaltemittels ohne antimycotische Eigenschaften in das Nahrungsmittelprodukt oder durch eine Kombination dieser Verfahren erhalten worden ist, und mit einem pH von 4,5 bis 5,5, der durch Einverleibung eines für Nahrungsmittel geeigneten Säuerungsmittels eingestellt worden ist, in Abwesenheit eines antimycotischen Mittels in einem Behälter pasteurisiert und daß man den Behälter vor, während oder unmittelbar nach der Pasteurisierung hermetisch verschließt.

2. Verfahren nach Anspruch 1, dadurch gekennzeichnet, daß das Feuchthaltemittel aus Zuckern, Salzen, Polyolen und Säuren, die in Wasser löslich sind, oder aus deren Gemischen ausgewählt wird.

3. Verfahren nach Anspruch 2, dadurch gekennzeichnet, daß das Feuchthaltemittel aus Glycerin, Saccharose, Dextrose, Natriumchlorid und Sorbit sowie deren Gemischen ausgewählt wird.

4. Verfahren nach einem der vorhergehenden Ansprüche, dadurch gekennzeichnet, daß das Säuerungsmittel aus Essig-, Zitronen-, Milch-, Äpfel- oder Weinsäure, Glucono-$\delta$-lacton oder saurem Natriumpyrophosphat ausgewählt wird.

5. Verfahren nach einem der vorhergehenden Ansprüche, dadurch gekennzeichnet, daß die Pasteurisation durch Erhitzen mit Dampf oder mit heißem Wasser oder durch Erhitzen mittels microwellen oder durch eine Kombination dieser Methoden durchgeführt wird.

6. Verfahren nach einem der vorhergehenden Ansprüche, dadurch gekennzeichnet, daß die Nahrungsmittelprodukte die Form von Crepes, Waffeln, Gemüse, Produkten auf der Basis von Gemüse oder Teigwaren aufweisen.

**Claims**

1. A process for the preparation of pasteurised intermediate moisture food products characterised in that a food product, having a water activity of from 0.86 to 0.91 obtained by drying the food product or at least a part of the ingredients thereof or by incorporation of at least one edible humectant not having antimycotic properties into the food product or by a combination of these methods, and having a pH of from 4.5 to 5.5 obtained by the incorporation of an edible acidulant in the absence of an antimycotic agent, is pasteurised in a container which is hermetically sealed before, during or immediately after pasteurisation.

2. A process according to claim 1 characterised in that the humectant is selected from watersoluble sugars, salts, polyols and acids, or mixtures thereof.

3. A process according to claim 2 characterised in that the humectant is selected from glycerol, sucrose, dextrose, sodium chloride and sorbitol or mixtures thereof.

4. A process according to any of the preceding claims characterised in that the acidulant is acetic, citric, lactic, malic or tartaric acid, glucono-$\delta$-lactone or sodium acid pyrophosphate.

5. A process according to any of the preceding claims characterised in that the pasteurisation is effected by heating with steam or hot water, or by microwave heating, or by a combination of these methods.

6. A process according to any of the preceding claims characterised in that the food products are in the form of pancakes, waffles, vegetables, vegetable based products or pasta products.